# EUROPÄISCHE PATENTANMELDUNG

(11) **EP 2 584 402 A2**
(43) Veröffentlichungstag der Anmeldung: **24.04.2013**
(21) Anmeldenummer: 12189390.3
(22) Anmeldetag: 22.10.2012
(51) Int. Cl.: G03B 17/56

(54) **Halterung für eine Kamera**

(30) Priorität: 21.10.2011 DE 102011116603
(71) Anmelder: Seven Stones GmbH, 73547 Lorch (DE)
(72) Erfinder: Sattler, Markus, 73547 Lorch (DE)
(74) Vertreter: Vomberg, Friedhelm

(57) **Zusammenfassung**

Die Erfindung betrifft eine Halterung (10) für eine Foto-, Video- oder Film-Kamera und deren Anbauteile wie Blitzlichter, stationäre Beleuchtungen, Handgriffe, Mikrofone oder ähnliches, wobei die Kamera und die Anbauteile lösbar befestigt sind.

Erfindungsgemäß weist die Halterung einen Basisträger (11) auf, an dem die Kamera oder das Kameraobjektiv befestigt ist, und mindestens zwei, vorzugsweise drei oder vier, um die optische Achse der Kamera angeordnete Auslegearme (12), die lösbar am Basisträger befestigt sind, wobei die Auslegearme ein Profil aufweisen, woran Anbauteile ohne rotatorischen Freiheitsgrad um die Achse der Auslegearm befestigbar sind.

## Beschreibung

Die Erfindung betrifft eine Halterung für eine Foto-, Video- oder Film-Kamera und deren Anbauteile wie Blitzlichter, stationäre Beleuchtungen, Handgriffe, Mikrofone o.ä., wobei die Kamera und die Anbauteile lösbar befestigt sind.

Kameras, insbesondere Video- oder Film-Kamera mit zumeist digitalem Datenträger werden insbesondere im Profibereich, aber auch im Markt engagierter Amateure mit einer Vielzahl von Anbauteilen der genannten Art, aber auch Schulterstützen, Monitoren, Stativ, Kreiselmassen zur Bildstabilisierung oder weiteren Kameras für räumliche Aufnahmen ergänzt. Für viele Aufnahmen ist es wichtig, dass die Anbauteile in Bezug auf die Kamera sowie etwaige Objekte ortsgenau und wiederholbar sowie stabil in einer bestimmten räumlichen Position befestigt werden.

Nach dem Stand der Technik bekannte Halterungen arbeiten vielfach mit Systemen aus Rundrohren sowie Klemmvorrichtungen oder Verbindungsgelenken, aus denen ein Gestell mit verschiedenen Auslegern zunächst die Kamera fixiert und an dem dann die weiteren Anbauteile ebenfalls per Klemmung befestigt werden können. Die bekannten Systeme weisen den Nachteil auf, dass aufgrund des rotatorischen Freiheitsgrades, den ein Klemmgelenk auf einem Rundrohr in jeder Winkellage zur Achse des Rohres erlaubt, einerseits keine eindeutige Definition der Position möglich ist, so dass nach einer Demontage des betreffenden Anbauteils oder nach einer unbeabsichtigten Veränderung der Klemmlage die vorherige gewünschte genaue Position nicht oder nicht genau wiederherstellbar ist. Im Übrigen erfordern solche Justierarbeiten Zeit, abgesehen davon, dass die Handhabung umständlich ist, da die Kamera bzw. die Kamerahalterung und das Anbauteil festgehalten werden muss, so dass das Fixieren durch ein Festziehen der Klemmschrauben kaum von einer Person durchgeführt werden kann. Ebenso ist auch die Längsposition auf einem Klemmrohr nur schwer eindeutig festlegbar. Soweit für die Fixierung der Klemmvorrichtung großvolumige Bauteile verwendet werden, ergibt sich der weitere Nachteil, dass die Zugänglichkeit zur Kamera erschwert wird. Diese muss jedoch zum Wechsel von Objektiven oder Speicherkarten gegeben sein.

Nach dem Stand der Technik sind auch Halterungssysteme bekannt, bei denen drei oder vier Rechteckprofile unter dem Objektiv einer Kamera an einem rohrähnlichen Träger angebracht sind. Die Anordnung von solchen Rechteckprofilen unterhalb der optischen Achse des Objektiv ist zum Teil ungünstig, beispielsweise bei Verwendung eines Blitzlichtgerätes oder wenn eine indirekten Raumbeleuchtung gewünscht wird. Entsprechendes ergibt sich, wenn aus akustischen Gründen eine Mikrofonanbringung oberhalb der Kamera benötigt wird. Das hierdurch geschaffene Problem lässt sich zwar lösen, indem ein weiterer Halter verwendet wird, jedoch erhöht sich hierdurch das Gewicht bei gleichzeitiger Einschränkung der Flexibilität der gesamten Halterung. Im Übrigen benötigt die bekannte Konstruktion unterhalb der Kamera bzw. unterhalb des Objektivs einen großen Raum, da die Profilschienen nicht allein stehen, sondern stets an der Stirn- sowie Rückseite um ein rohrähnliches Gebilde herum befestigt sind. Schließlich besteht der Nachteil, dass dieses bekannte System nur dann mit dem klassischen "15 mm lightweight-standard" kompatibel ist, wenn das Grundsystem sehr weit unter der Kamera und das Objektiv gebracht wird, um dazwischen Platz für die Rundrohre des "15mm lightweight-standard" zu schaffen.

Es ist Aufgabe der Erfindung, die vorstehend genannten Nachteile zu vermeiden und eine Halterung der eingangs genannten Art anzugeben, mit der in leicht handhabbarer Weise eine wiederholbarer lagespezifische Befestigung geschaffen werden kann.

Zur Lösung dieser Aufgabe wird die Halterung nach Anspruch 1 vorgeschlagen, die erfindungsgemäß dadurch gekennzeichnet ist, dass die Halterung einen Basisträger aufweist, an denen die Kamera oder das Kameraobjektiv befestigt ist, und mindestens zwei, vorzugsweise drei oder vier um die optische Achse der Kamera angeordnete Auslegearme, die lösbar am Basisträger befestigt sind, wobei die Auslegearme einen Profil besitzen, woran Anbauteile ohne rotatorischen Freiheitsgrad um die Achse der Auslegearme befestigbar sind. Weiterbildungen der Erfindung sind in den Unteransprüchen beschrieben.

Zunächst werden entgegen dem Stand der Technik Auslegearme verwendet, die keinen runden Querschnitt haben, so dass ein etwa hierauf befestigtes Anbauteil stets in ein und derselben Winkellage am Auslegearm befestigt ist.

Die verwendeten Profile können insbesondere im Querschnitt mehreckig ausgebildet sein.

Vorzugsweise sind die Verbindungen der Auslegearme zum Basisträger und/oder der Anbauteile zu den Auslegearmen formschlüssig. Um in Längsrichtung der Auslegearme eine stets wieder auffindbare Befestigungsposition schaffen zu können, können die Auslegearme insbesondere im Wesentlichen als gezahnte Schiene ausgebildet sein. Der Abstand der einzelnen Zähne bestimmt hierbei das Maß der Feineinstellung. Im Querschnitt mehreckige Profile haben insbesondere bei der Befestigung von Anbauteilen den Vorteil, dass aufgrund der Querschnittsprofilkontur schnell eine erste Lagesicherung erreicht ist, die eine Winkelveränderung vor der Befestigung mittels einer Klemmschraube vermeiden lässt. Die bereits erwähnten Verzahnungen oder sonstige Formschlusselemente in Form von sprossenförmigen Ausbuchtungen erlauben ein schnelles Wiederauffinden ein und derselben Position durch Befestigung an ein und demselben Zahn bzw. ein und derselben Sprosse. Das Wiederauffinden der optimalen Lage kann beispielsweise dadurch erleichtert werden, dass jeder einzelne Zahn bzw. jede einzelne Sprosse eine fortlaufende Kennzeichnung durch eine Ziffer oder einem Buchstaben erhält. Die erfindungsgemäße Halterung ist insbesondere spielfrei, anders als beim Reibschluss, benötigt eine Formschlusshalterung keine hohen Anpresskräfte. Verwendete Klemmschrauben können ohne hohen Kraftaufwand angezogen werden; die Klemmelemente lassen sich insgesamt kleiner und handlicher gestalten, womit eine nicht unerhebliche Gewichtsreduzierung ebenso erreichbar ist wie auch der Bauraum kleinstmöglich gestaltet wird, so dass der Zugang zur Kamera selbst und zu allen anderen Teilen leichter möglich ist.

Vorzugsweise ist der Basisträger zumindest im Wesentlichen ring- oder teilringförmig ausgebildet und besitzt in äquidistanten, vorzugsweise 90°-Winkelabständen jeweils Aufnahmen für die Befestigung eines Auslegearmes. Ein als "Vollring" ausgestalteter Basisträger besitzt den Vorzug einer höchstmöglichen Stabilität, wohingegen eine Teilringausgestaltung, insbesondere als 270°-Ring ausgestaltet etwa ¼ des Gewichtes einsparen lässt und in dem freibleibenden Teilringraum eine ungehinderte Zugänglichkeit zur Kamera bzw. zum Objektiv ermöglicht.

Vorzugsweise sind an dem ringförmigen oder teilringförmigen Basisträger Aufnahmen mit einer nutförmigen Führung vorgesehen, deren Seitenwände weiterhin vorzugsweise einen Winkel ≤10° gegenüber der Vertikalen zur Nutbasis einnehmen, die weiterhin vorzugsweise ein oder zwei Gewindebohrungen aufweist.

Diese Aufnahmen, die schuhähnlich ausgestattet sind, können die Breite des verwendeten Basisträger-Ringes überragen, um eine verbesserte Auflagefläche zur Befestigung eines Auslegearmes zu schaffen. Jeder Auslagearm besitzt einen Fuß, der eine Erhebung aufweist, deren Profil dem Profil der Aufnahme des Auslegearmes angepasst ist, d.h. dass die Seitenwände entsprechend geneigt sind. Durch diese gewählte Keil- bzw. Trapezform werden die Füße der jeweiligen Auslegearme in Bezug auf die Schraubverbindung vorzentriert. Beim Aufsetzen der schuhartigen Erhebung des Auslegearms geraten die jeweiligen Bohrungen für die Schraubverbindung zwischen dem Auslegearm und dem ringförmigen Basisträger in eine gemeinsame Achslinie.

Nach einer weiteren Ausgestaltung der Erfindung ist an dem Basisträger zusätzlich eine Basisplatte oder ein Adapter zur Befestigung einer Kamera oder eines Kameraobjektivs vorgesehen. Die Kamera kann insbesondere mittels einer Schraubverbindung an der Basisplatte arretiert werden.

Weiterhin können zusätzliche Verbindungselemente an dem Basisträger oder einem oder den Auslegearmen befestigt sein, wobei deren Stirnseiten, die bei der Arretierung zur Anlage kommen mit weiteren Formschlussprofilen, vorzugsweise Hirth-Verzahnungen versehen sind. Hirth-Verzahnungen erlauben, gegen Rotation gesicherte Verbindungen. Die Auslegearme und/oder der Basisträger können nach einer weiteren Ausgestaltung der Erfindung Aussparungen in den Bereichen geringer Biege- oder Torsionsspannungen und Finnen oder Aussteifungen in Bereichen hoher Drehmomentbelastung aufweisen.

Um Gewicht einzusparen, sind der Basisträger und/oder die Auslegearme vorzugsweise aus Leichtmetall oder Kunststoff gefertigt.

Weitere Ausführungsbeispiele sowie Vorteile werden anhand der Zeichnungen erläutert. Es zeigt
- Fig. 1: eine Seitenansicht einer erfindungsgemäßen Halterung mit mehreren Auslegearmen sowie einer Basisplatte
- Fig. 2 und 3: jeweils eine weitere Seitenansicht einer Halterung mit zusätzlichem Adapter
- Fig. 3: eine perspektivische Ansicht der Halterung nach Figur 2
- Fig. 4 und 5: jeweils Ansichten weiterer Ausführungsbeispiele für erfindungsgemäße Halterung
- Fig. 6: eines ringförmigen Basisträgers der Halterung
- Fig. 7: eine ausschnittsweise Stirnansicht der Halterung
- Fig. 8: eine Querschnittsansicht eines Ausleger-Profil
- Fig. 9: eine Stirnansicht des Auslegerprofil,
- Fig. 10 und 11: jeweils Ansichten eines auf einem Auslegearm befestigten Adapters,
- Fig. 12: eine weitere Ausführungsform eines Auslegearmes und
- Fig. 13: einen Basisträger mit einem befestigten Zwischenstück

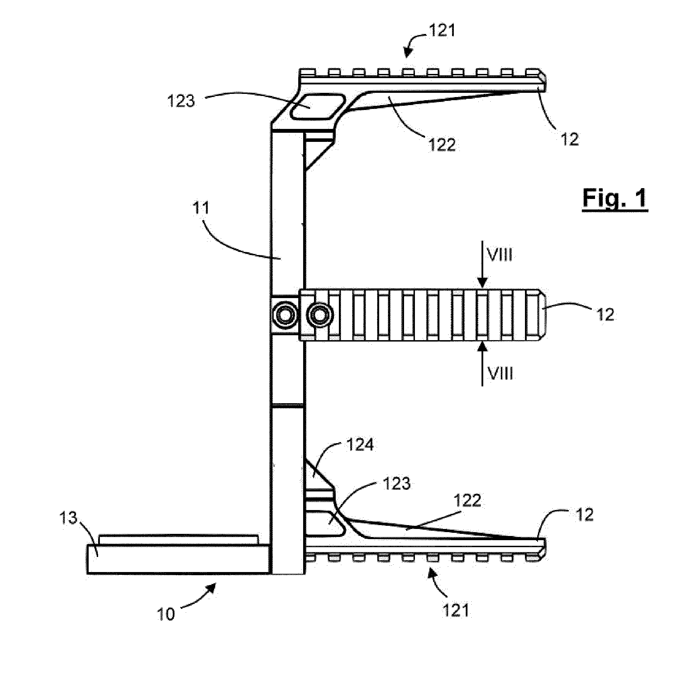

Um eine zentrische Anordnung der Halterung zur optischen Achse zu ermöglichen, ist vorgesehen, dass die Halterung 10 um das Objektiv herum angeordnet ist. Die in Fig. 1 bis 3 dargestellte Halterung besteht aus einem ringförmigen Basisträger 11, an dem Auslegearme 12 mit einem eckigen Querschnittsprofil befestigt sind, worauf später noch eingegangen wird. Wie aus Fig. 1 ersichtlich, ist eine Basisplatte 13 an dem ringförmigen Basisträger 11 befestigt, die zur Auflage und Arretierung einer Kamera mittels einer Schraubverbindung dient.

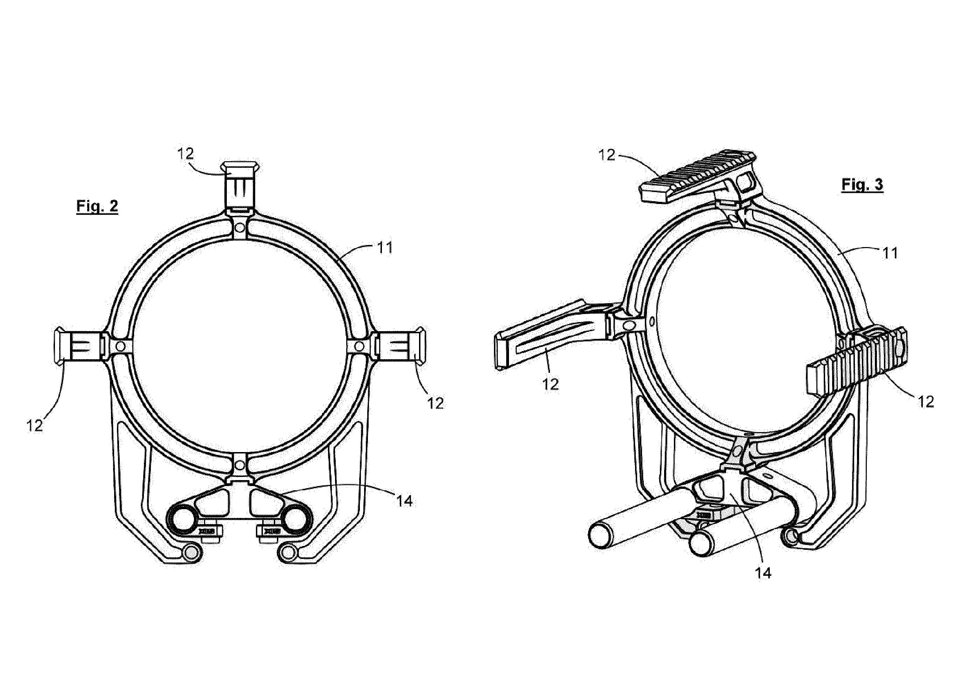

Die Auslegearme 12 können wie dargestellt jeweils gleich lang sein oder eine unterschiedliche Länge aufweisen. In einer (nicht dargestellten) bevorzugten Ausführungsform sind insbesondere die Auslegearme oberhalb des Objektivs und unterhalb des Objektivs länger ausgeführt als die an der Seite vorhandenen Auslegearme 12, um bei Kameras mit querformatigem Sensor bei maximaler Länge der Auslegearme keine Artefakte im Bild zu erzeugen. Wie aus Fig. 2 und 3 ersichtlich, können auch zusätzliche Adapter 14 an dem ringförmigen Basisträger 11 befestigt sein, die die Befestigung branchenüblicher Rohrsysteme 15 mm Lightweight-Standard oder 15 mm Studio-Standard oder 19 mm Studio-Standard erlauben. Dies sind nach dem Stand der Technik standardisierte Anordnungen von zwei Rundrohren, deren Abstand untereinander sowie der Abstand zur optischen Achse der Kamera fest definiert sind. Im Falle der Ausführungsformen nach Fig. 2 und 3 ersetzt dieser Adapter den unteren Ausleger 12.

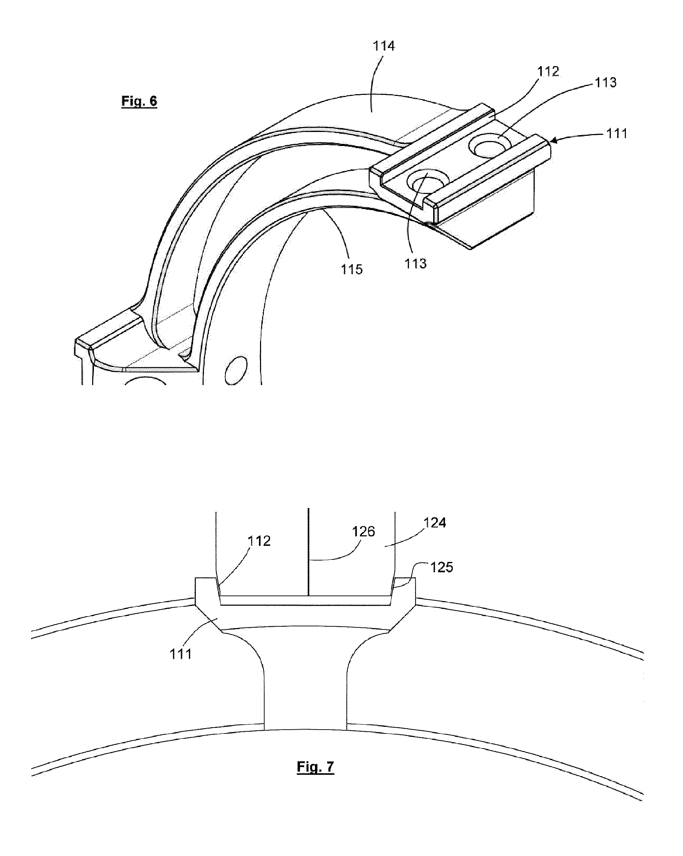

Die in Fig. 1 und 3 dargestellten Auslegearme besitzen obenseitig ein Zahnprofil 121. Zur Erhöhung der Steifigkeit bei Belastung sind Finnen 122 bzw. anders geformte Längsstreben oder Aussteifungen vorgesehen, wohingegen im abgeknickten Bereich zum Fuß Aussparungen 123 zu erkennen sind. Der im Detail in Fig. 7 dargestellte Fuß 124 eines Adapters 12 besitzt an seinem Ende eine leichte Abschrägung, d.h. Abschrägung 125, die gegenüber der Vertikalachse 126 um einen Winkel von maximal 10° geneigt sind. Eine entsprechende Abschrägung 112 besitzen schuhartig ausgebildete Aufnahmen 111, die eine Nut mit Seitenwänden 112 haben, die entsprechend geneigt sind. Auf diese Weise erhält der aufgesetzte Fuß 124 eine zwangsweise Zentrierung, welche die Befestigung des Auslegearmes 12 über eine Schraubverbindung erleichtert. Zum Festziehen einer Schraube besitzen die Füße 124 Bohrungen. Wie Fig. 6 zu entnehmen, sind zwei Gewinde- Sacklochbohrungen 113 für Schraubverbindungen zwischen dem Auslegearm und dem Basisring 11 vorgesehen. Durch die Schraubverbindung ist die Lage des Auslegearms in Bezug auf den Basisring 11 eindeutig und stets wieder auffindbar festgelegt.

Im vorliegenden Fall werden drei bzw. vier Auslegearme 12 verwendet, die in 90°-Abständen angeordnet sind. Eine solche Anzahl von Auslegearmen reicht üblicherweise aus, um genügend Anbauraum für benötigte Anbauteile zu schaffen.

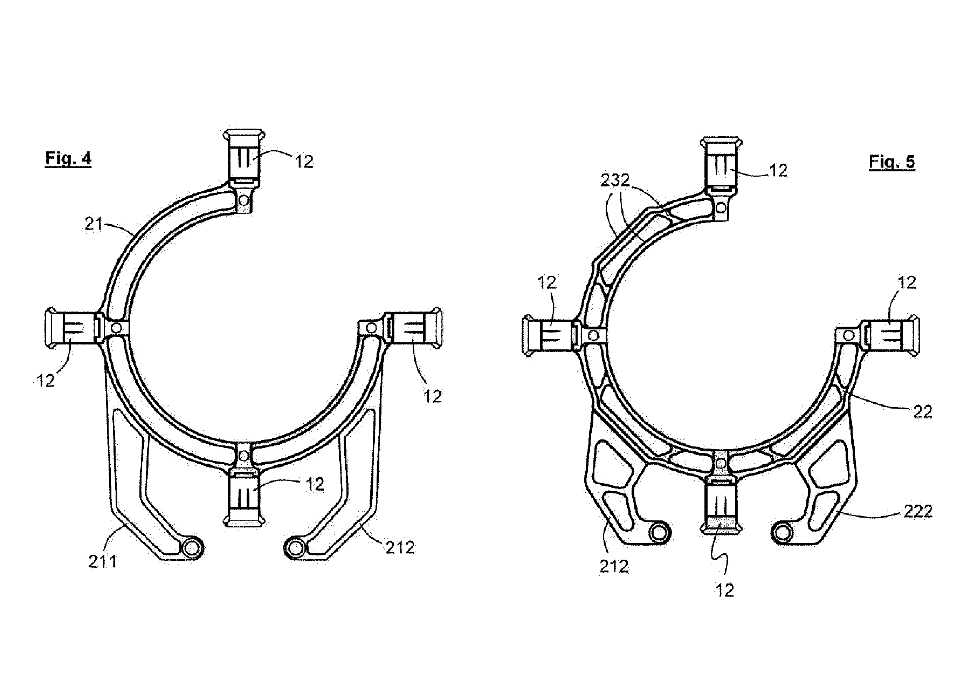

Die Ausführungsform nach Fig. 4 und 5 unterscheidet sich von der Ausführungsform nach Fig. 1 dadurch, dass der Basisträger 21 bzw. 22 nur teilringförmig ausgebildet ist. Dieser Basisträger 21, 22 füllt nur einen Teilkreis von 270° aus. Im Übrigen sind die Auslegearme 12 in derselben Weise wie vorher beschrieben befestigt. Zusätzlich besitzt der Basis-Teilring 21,22 noch weitere Anbauarme 211, 212 bzw. 221 und 222, die alternativ für eine Kamerabefestigung dienen.

Der Basiskörper kann aus zwei im Wesentlichen parallel laufenden Ringschalen 114, 115 bestehen, die über entsprechende Verbindungselemente gehalten werden oder aus einem fachwerkartigen Profil 223 bestehen, dass in Fig. 5 dargestellt ist.

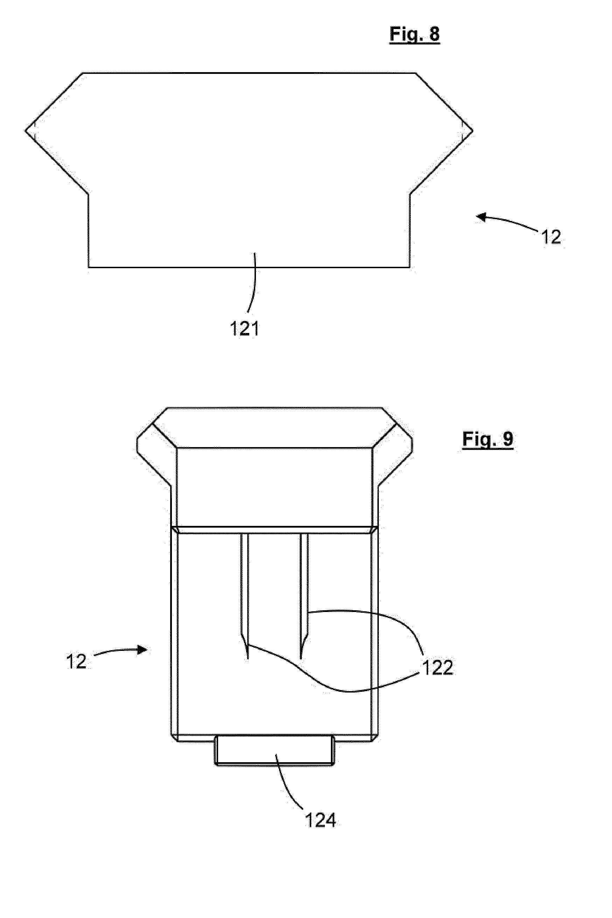

Fig. 8 zeigt das Querschnittsprofil eines Auslegers im Bereich VIII-VIII (siehe Fig.1). Dieses Querschnittsprofil lässt eine spitzwinkelige Form mit einem Noppen 121 erkennen, womit ein gewünschter Formschluss leicht herstellbar ist. Fig. 9 zeigt eine Draufsicht des Auslegerprofils 12 mit den Verstärkungs-Finnen 122.

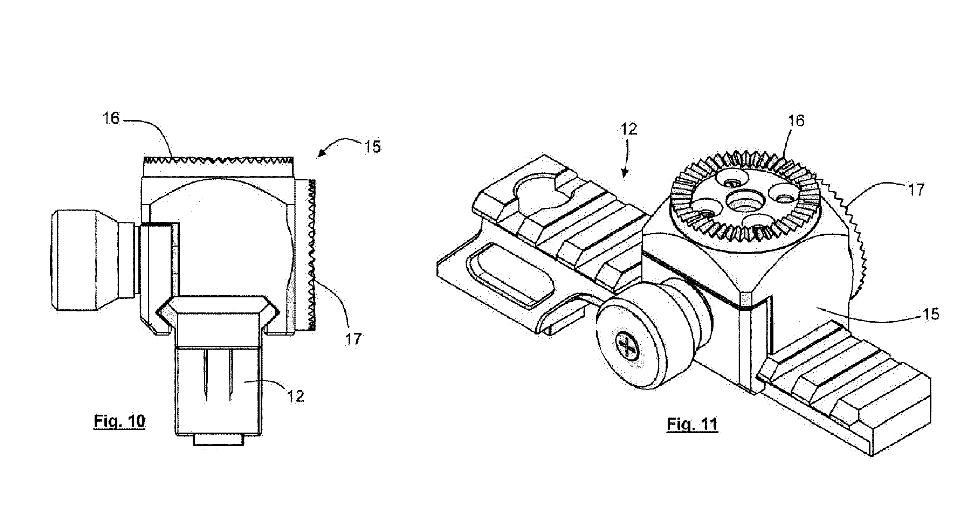

Aus Fig. 10 und 11 ist ersichtlich, wie zusätzliche Verbindungselemente 15 auf einem Ausleger 12 befestigt werden. Diese Verbindungselemente umgreifen den Ausleger und besitzen Stirnseiten 16, 17 mit einer Hirth-Verzahnung.

Das erfindungsgemäße System kann in einer erweiterten Ausführung auch Adapterteile aufnehmen, die auf einer Seite die bekannten Rundprofile (siehe Fig. 3, 2) aufweisen und auf der anderen Anschlussseite das erfindungsgemäße Formschlussprofil durch den Auslegearm 12. Die Auslegearme 12 sind so aufgebaut, dass die Innenkontur in Richtung der Stirnseite divergiert.

Die Auslegearme 12 sind über Schrauben einzeln demontierbar bzw. sind montierbar. Durch die vorhandenen Bohrungen bzw. Gewinde-Sacklochbohrungen 113 kann auf Befestigungsmuttern verzichtet werden.

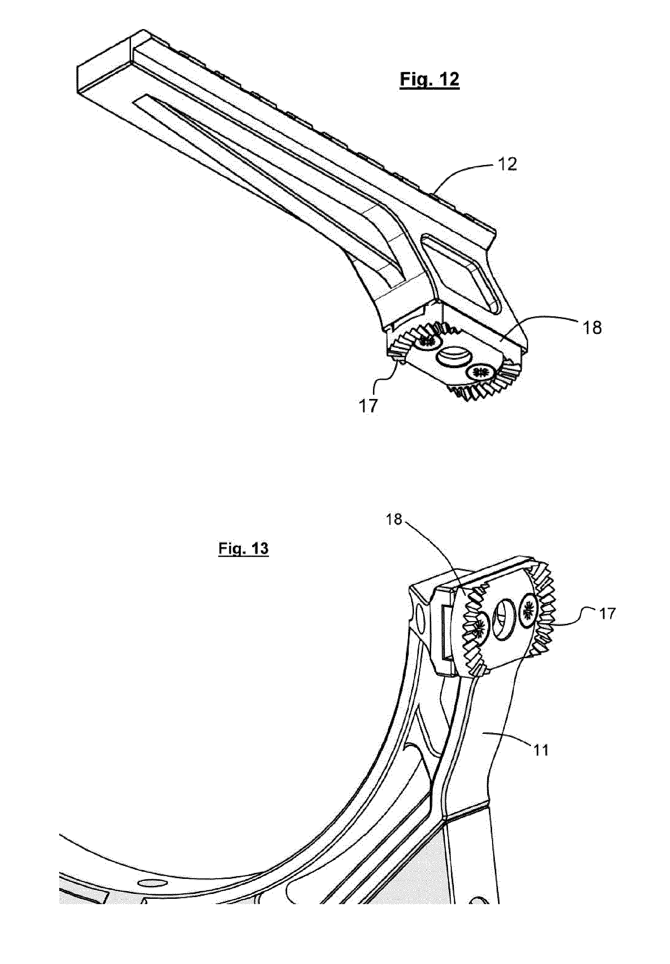

Fig. 12 und 13 zeigen Zwischenstücke 18 mit einer stirnseitigen Hirth-Verzahnung, die auf dem Fuß 124 eines Auslegearmes 12 und auf der Aufnahme 111 des Basisträgers 11 befestigt sind.

## Patentansprüche

1. Halterung für eine Foto-, Video- oder Film-Kamera und deren Anbauteile wie Blitzlichter, stationäre Beleuchtungen, Handgriffe, Mikrofone oder ähnliches, wobei die Kamera und die Anbauteile lösbar zu befestigen sind, **dadurch gekennzeichnet, dass**
die Halterung (10) einen Basisträger (11) aufweist, an dem die Kamera oder das Kameraobjektiv befestigt ist, und mindestens zwei, vorzugsweise drei oder vier, um die optische Achse der Kamera angeordnete Auslegearme (12), die lösbar am Basisträger (11) befestigt sind, wobei die Auslegearme (12) ein Profil aufweisen, woran Anbauteile ohne rotatorischen Freiheitsgrad um die Achse der Auslegearm (12) befestigbar sind.

2. Halterung nach Anspruch 1, **dadurch gekennzeichnet, dass** die Verbindung der Auslegearme (12) zum Basisträger (11) und/oder der Anbauteile (14, 15) zu den Auslegearmen formschlüssig ist.

3. Halterung nach Anspruch 1 oder 2, **dadurch gekennzeichnet, dass** die Profile der Auslegearme (12) im Wesentlichen eckig ausgebildet sind, vorzugsweise im Wesentlichen als gezahnte Schiene.

4. Halterung nach einem der Ansprüche 1 bis 3, **dadurch gekennzeichnet, dass** der Basisträger (11) im Wesentlichen ring- oder teilringförmig ausgebildet und in äquidistanten, vorzugsweise 90°-Winkelabständen jeweils Aufnahmen (111) für die Befestigung eines Auslegearmes (12) aufweist.

5. Halterung nach Anspruch 4, **dadurch gekennzeichnet, dass** die Aufnahme (111) eine nutförmige Führung besitzt, deren Seitenwände (112) vorzugsweise einen Winkel ≤ 10° gegenüber der Vertikalen (126) zur Nutbasis geneigt sind, die weiterhin vorzugsweise ein oder zwei Gewindebohrungen (113) aufweist.

6. Halterung nach einem der Ansprüche 4 bis 5, **dadurch gekennzeichnet, dass** die Auslegearme (12) einen Fuß (124) besitzen, der eine Erhebung aufweist, deren Profil dem Profil der Aufnahme (111) des Basisträgers (11) angepasst ist.

7. Halterung nach einem der Ansprüche 1 bis 6, **dadurch gekennzeichnet, dass** an dem Basisträger (11) eine Basisplatte(13) oder ein Adapter zur Befestigung einer Kamera oder eines Kameraobjektivs befestigt ist.

8. Halterung nach einem der Ansprüche 1 bis 7, **dadurch gekennzeichnet, dass** zusätzliche Verbindungselemente (15) an dem Basisträger (11) oder dem Auslegearm (12) befestigt sind, die Stirnseiten mit weiteren Formschlussprofilen, vorzugsweise Hirth-Verzahnungen (16, 17) aufweisen.

9. Halterung nach einem der Ansprüche 1 bis 8, **dadurch gekennzeichnet, dass** die Auslegearme (12) und/oder der Basisträger (11) Aussparungen (123) in den Bereichen geringerer Biegungs- oder Torsionsspannungen und Finnen (122) oder Aussteifungen in Bereichen hoher Drehmomentbelastung aufweisen.

10. Halterung nach einem der Ansprüche 1 bis 9, **dadurch gekennzeichnet, dass** der Basisträger (11) und/oder die Auslegearme (12) aus Leichtmetall oder Kunststoff bestehen.
